# EUROPÄISCHE PATENTSCHRIFT

(11) **EP 3 496 899 B1**
(45) Veröffentlichungstag und Bekanntmachung des Hinweises auf die Patenterteilung: **29.07.2020**
(21) Anmeldenummer: 17762040.8
(22) Anmeldetag: 08.08.2017
(51) Int. Cl.: B25B 5/06, F16D 59/02

(54) **BREMS- UND/ODER KLEMMVORRICHTUNG MIT EINER BETÄTIGUNGS- UND EINER WELLENANBINDUNGSBAUGRUPPE II**
BRAKING AND/OR CLAMPING DEVICE HAVING AN ACTUATION ASSEMBLY AND A SHAFT-COUPLING ASSEMBLY II
DISPOSITIF DE FREINAGE ET/OU DE SERRAGE COMPRENANT UN MODULE D'ACTIONNEMENT ET UN MODULE D'ACCOUPLEMENT D'ARBRE

(30) Priorität: 09.08.2016 DE 102016009581
(43) Veröffentlichungstag der Anmeldung: 19.06.2019
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2017/000249
(87) Internationale Veröffentlichungsnummer: WO 2018/028731

(56) Entgegenhaltungen:
- DE-A1- 2 106 009
- DE-B3-102009 022 206
- US-B1- 6 629 584

## Beschreibung

Die Erfindung betrifft eine Brems- und/oder Klemmvorrichtung für eine gegenüber einem Grundkörper geführte Welle mit einer Betätigungsbaugruppe und mit einer Wellenanbindungsbaugruppe.

Aus der DE 10 2008 020 518 B4 ist eine Brems- und/oder Klemmvorrichtung für Wellen bekannt, bei der um die Welle herum z.B. zehn auf Reibgehemme wirkende Schiebekeilgetriebe angeordnet sind. Die Schiebekeile werden mittels Pneumatikzylinder verstellt, um die einzelnen Bremsbacken gegen die Welle zu pressen. Diese Konstruktion hat einen hohen Bauraumbedarf und wirkt direkt auf die Welle.

Die EP 1 228 321 B1 beschreibt eine Klemm- und/oder Bremsvorrichtung zum Klemmen und/oder Bremsen einer Welle. Die Welle wird dabei von einem Grundkörper umgeben. Der Grundkörper umfasst einen äußeren Ring, einen inneren Ring und zwei zwischen den Ringen angeordnete flache felgenartige Wandungen. Die Ringe und die Wandungen schließen einen Druckraum ein. Bei belüftetem Druckraum ist der innere Ring radial an der Welle festgeklemmt. Wird der Druckraum mit einem Druckmittel beschickt, beulen die Wandungen, wodurch der innere Ring die Welle freigibt.

Die DE 10 2009 022 206 B3 und DE 2 106 009 A offenbaren eine Lagerung mit einer Brems- und/oder Klemmvorrichtung.

Der vorliegenden Erfindung liegt die Problemstellung zugrunde, eine derartige Brems- und/oder Klemmvorrichtung zu entwickeln, die auch bei einem großen Durchmesser eine geringe Baubreite aufweist, aus wenigen Bauteilen besteht und zudem einfach, sicher und wartungsfrei funktioniert.

Diese Problemstellung wird mit den Merkmalen des Hauptanspruchs gelöst. Dabei weist die Betätigungsbaugruppe ein Spaltgehäuse auf, das eine Anbauzone und eine bereichsweise elastisch beulbare Biegezone mit zwei durch einen Spaltraum getrennten Biegeplatten hat. Die Biegeplatten weisen in zwei einander gegenüberliegenden Klemmzonen jeweils Zangenbacken mit Reibflächen auf, deren Flächennormalen nach innen gerichtet sind. Zwischen den Biegeplatten liegt ein abgedichteter Druckraum, der zum elastischen Auseinanderdrücken der Reibflächen mit einem Druckmedium befüllbar ist.

Die Wellenanbindungsbaugruppe weist einen Kupplungsbereich auf, der zwei voneinander beabstandete Reibflächen hat, deren Flächennormalen nach außen weisen. Die Wellenanbindungsbaugruppe weist einen Wellenanbindungsbereich auf. Der Wellenanbindungsbereich ist entweder direkt oder indirekt über einen Spannmechanismus am Kupplungsbereich angeordnet. Bei entlastetem Druckraum sind die Reibflächen der Betätigungsbaugruppe an den Reibflächen der Wellenanbindungsbaugruppe unter Bereitstellung der Klemm- und/oder Bremskraft anlegbar.

Der Gegenstand der vorliegenden Erfindung ist eine mindestens zweiteilige Brems- und/oder Klemmvorrichtung für Wellen. Das eine Teil wird als Adapter auf die Welle montiert und an dieser festgeklemmt oder festgeschraubt, um mit dieser zu rotieren. Es hat beispielsweise einen radial abstehenden Klemmflansch. Das andere Teil ist eine Art von Zange, die an einem ortsfesten, z.B. die vorgenannte Welle lagernden Maschinenteil befestigt ist. Die Zange hat z.B. ringförmige Zangenbacken, mit denen sie die Stirnseiten des wellenseitigen Flansches lose umfassen oder drehfest umgreifen kann. Die die Welle bremsenden oder klemmenden Vorrichtungsteile liegen nicht auf der Außenwandung der Welle an, d.h. die Arbeitsfuge der Brems- und/oder Klemmvorrichtung ist identisch mit der Wandung der Welle selbst.

Die ringförmigen Zangenbacken der Vorrichtung lassen sich vereinfacht als zwei Tellerfedern beschreiben, deren beiden Innenränder einander zugewandt sind, während die im Durchmesser größeren Außenränder in Axialrichtung weit auseinanderliegen. Zwischen die Innenränder, die eine Klemmzone bilden, wird der Klemmflansch eingelegt. Werden nun die Außenränder, die die Anbauzone darstellen, in Axialrichtung aufeinander zubewegt, klemmen die im Durchmesser kleineren Innenränder den Klemmflansch zum Halten federgespannt zangenartig ein. Die Tellerfedern werden bei der Herstellung im Bereich der Außenränder aneinander angeformt, sodass sich der Abstand der Außenränder nicht mehr ändern lässt. Um nun den Klemmflansch wieder freizugeben, werden die Tellerfedern mit Öldruck auseinandergepresst. Die Innenränder lösen sich vom Klemmflansch. Die bisher zum Klemmen wenig vorgespannten Tellerfedern werden somit zum Lösen noch stärker gespannt bzw. verformt.

Alternativ lässt sich die Vorrichtung auch so gestalten, dass der Klemmflansch in der Bohrung eines rotierenden Ringes angebracht wird, während die ortsfest gelagerte Zange räumlich innerhalb des rotierenden Ringes dessen nach innen kragenden Klemmflansch umgreift.

Weitere Einzelheiten der Erfindung ergeben sich aus den Unteransprüchen und der nachfolgenden Beschreibung mindestens einer schematisch dargestellten Ausführungsform.
- Figur 1:: perspektivische Ansicht einer Brems- und/oder Klemmvorrichtung mit einer auf einem Doppelradialspannflansch basierenden Wellen-Naben-Verbindung;
- Figur 2:: Teillängsschnitt zu Figur 1;
- Figur 3:: Teillängsschnitt zu Figur 1, jedoch mit ungeradem und/oder flexiblem Führungselement;
- Figur 4:: Teillängsschnitt durch eine Wellen-Naben-Verbindung mit Verdrängerspannhülse, vergrößert;
- Figur 5:: Teillängsschnitt durch eine Wellen-Naben-Verbindung mit Ringfederspannsatz, vergrößert;
- Figur 6:: Teillängsschnitt der Brems- und/oder Klemmvorrichtung mit einem abgestützten Stützring;
- Figur 7:: Teillängsschnitt der Brems- und/oder Klemmvorrichtung mit einem nicht abgestützten Stützring.

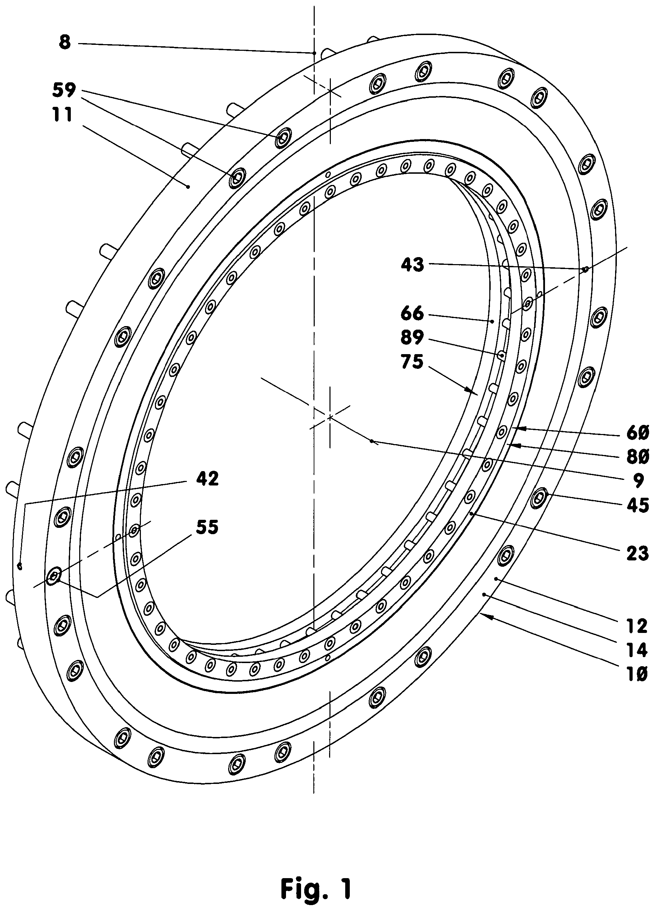

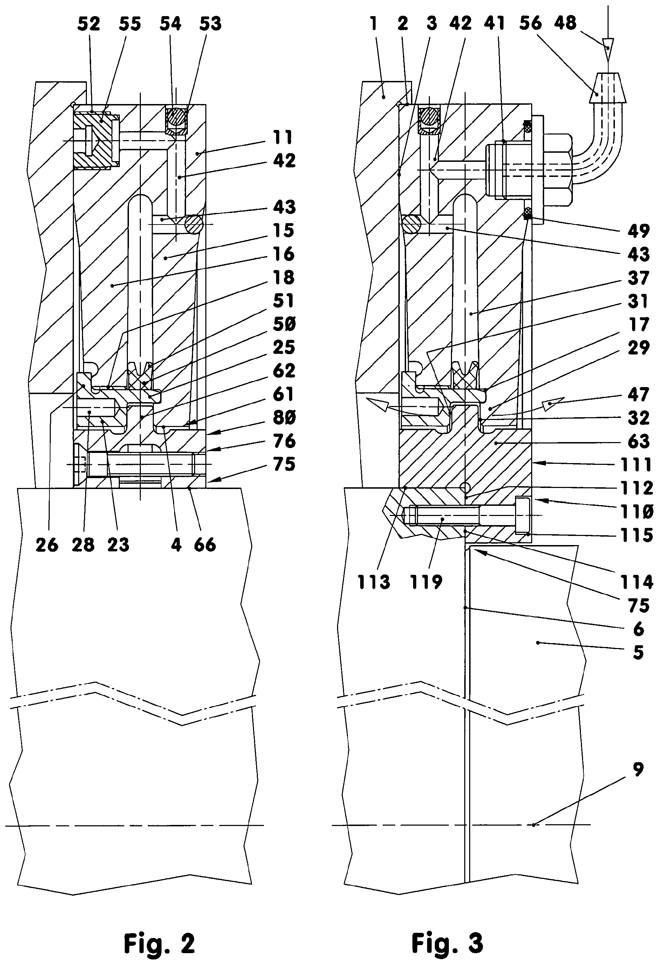

Die Figur 1 zeigt die Brems- und/oder Klemmvorrichtung ohne den tragenden maschinenseitigen Grundkörper (1), vgl. Figur 2 oder 3, und ohne die abzubremsende und/oder festzuklemmende Welle (5). Die außenliegende Betätigungsbaugruppe (10) hat eine Rückseite, über die sie mittels der Befestigungsschrauben (59) am Grundkörper (1) angeschraubt wird. Die Betätigungsbaugruppe (10) umgibt eine Wellenanbindungsbaugruppe (60), die einen Klemmflansch (62) an der Welle (5) adaptiert. Die Betätigungsbaugruppe (10) hat ein elastisches Spaltgehäuse (11), das mit seinen Zangenbacken (23, 29) - beim Bremsen oder Klemmen - zangenartig an dem Klemmflansch (62) anliegt. Das Spaltgehäuse (11) umschließt zusammen mit einem Dichtring (50) einen Druckraum (37, 38). Wird Letzterer mit einem gasförmigen, flüssigen oder gelartigen Druckmittel beaufschlagt, löst sich die zangenartige Umklammerung des Klemmflansches (62).

Der Druckraum (37, 38) hat ein Volumen, das kleiner ist als 12,5 Prozent des Hüllvolumens der Betätigungsbaugruppe (10). Das Hüllvolumen der in den Figuren dargestellten Variante, entspricht einem gegebenen Volumen eines Rohrkörpers, dar als Rohrlänge die Vorrichtungsbreite, als Außendurchmesser den äußeren Vorrichtungsdurchmesser und als Innendurchmesser den minimalen Innendurchmesser der Biegeplatte (15) hat.

Die Betätigungsbaugruppe (10) weist ein ring- bzw. rohrförmiges Spaltgehäuse (11) auf, das den z.B. schmalspaltigen ringförmigen Druckraum (37) umschließt. Das Spaltgehäuse (11) ist im unverformten Zustand im Wesentlichen eine ebene Scheibe mit einem Innendurchmesser von z.B. ca. 280 mm und einem Außendurchmesser von z.B. 388 mm. Die maximale Dicke der Scheibe liegt bei z.B. 22 mm. Das Spaltgehäuse (11) ist aus einem Vergütungsstahl, z.B. 42CrMoS4, gefertigt. Es ist in drei Bereiche (13, 21, 26) aufgeteilt, die in Radialrichtung aneinander anschließen. Der innere Bereich sind die Klemmzonen (22). An sie schließt sich die Biegezone (21) an, die in den äußeren Bereich, die Anbauzone (13), mündet.

Das Spaltgehäuse (11) wird zur Herstellung des Spaltraumes (37, 38) von seiner zentralen Bohrung (4) aus z.B. mit einem Scheibenfräser mittig zwischen den Stirnseiten ausgefräst. Die ausgefräste, z.B. 38,7 mm tiefe Nut hat eine Spaltbreite von z.B. 4 mm. Der rinnenförmige Nutgrund hat hier einen Radius von 2 mm.

Die Anbauzone (13), in die der Spaltraum (37, 38) nicht oder nur 1 bis 10 mm hineinragt, hat z.B. beidseitig eine zumindest bereichsweise plane Stirnfläche, über die das Spaltgehäuse (11) an einer Anbaufläche (3) des Grundkörpers (1) anlegbar ist. Sie weist auf einem Durchmesser von z.B. 370 mm alle 30 Winkelgrade eine aus zwei Senk- oder Doppelsenkbohrungen (45) bestehende Bohrungsgruppe auf. Diese Durchgangsbohrungen haben an einem oder an beiden Enden jeweils eine Senkung nach DIN 974. Die Senk- oder Doppelsenkbohrungen (45) der einzelnen Bohrungsgruppe sind gegeneinander um 10 Winkelgrade versetzt angeordnet. Zwischen jeweils zwei Bohrungsgruppen befindet sich die Zulauf- oder die Verschlussstopfengewindebohrung (41). Die Bohrungen (41) liegen sich z.B. auf verschiedenen Durchmessern diametral gegenüber und sind zugleich auf unterschiedlichen Stirnseiten der Anbauzone (13) angeordnet.

Gemäß der Figur 3 befindet sich in der Anbauzone (13) mindestens eine Zulaufgewindebohrung (41) auf der Vorderseite (12) der Betätigungsbaugruppe (10). Das hier verwendete M10-Feingewinde nimmt nach Figur 3 - nur beispielhaft - einen Hydraulikadapter (56) auf. Alternativ kann die Zulaufgewindebohrung (41) mit ihrem Schneidring (49) und dem an ihm anliegenden Dichtring auch auf der Rückseite der Betätigungsbaugruppe (10) liegen, vgl. Figur 1. In diesem Fall liegt der Zulaufgewindebohrung (41) - in Figur 1 nicht dargestellt - eine druckmittelführende Bohrung im Grundkörper (1) gegenüber. Der Schneidring (49) unterstützt hier die Dichtwirkung zwischen der Anbaufläche (3) und der Rückseite der Betätigungsbaugruppe (10).

Die Zulaufgewindebohrung (41), vgl. Figuren 2 und 3, mündet in eine radiale Verteilbohrung (42). Nach außen hin ist diese Verteilbohrung (42) durch eine Klemmbüchse (53) verschlossen. In die Bohrung der Klemmbüchse (53) ist eine Stauchkugel (54) eingestemmt, die die Klemmbüchse (53) in der einzelnen radialen Verteilbohrung (42) öl- oder gasdicht dauerhaft fixiert. Die radiale Verteilbohrung (42) trifft z.B. senkrecht auf eine axiale Verteilbohrung (43), die in den Druckraum (37, 38) mündet. Die axiale Verteilbohrung (43) ist zur Anbaufläche (3) hin mit einer Stauchkugel dicht verschlossen.

Die Verteilbohrungen (42, 43) haben hier einen Durchmesser von 3 mm. Das über den Hydraulikadapter (56) einströmende Hydrauliköl, z.B. ein Öl vom Typ HLP 46 nach DIN 51524, Teil 2, das bei 40° Celsius eine Viskosität von 46 ± 2 mm²/s aufweist, verteilt sich schnell im Druckraum (37, 38).

Nach Figur 2 befindet sich in der Anbauzone (13) zudem mindestens eine Verschlussstopfengewindebohrung (52), die ebenfalls in eine Vertikalbohrung (42) mündet und von dort aus über eine axiale Verteilbohrung (43) mit dem Druckraum (37, 38) verbunden ist. Nach außen hin sind diese Verteilbohrungen in der gleichen Weise verschlossen, wie die Verteilbohrungen des Zulaufs.

Die beiden an die Anbauzone (13) angeformten Biegeplatten (15, 16) stellen die elastische Biegezone (21) dar. Die beidseits des Spaltraumes (37, 38) gelegenen, elastisch verformbaren Biegeplatten (15, 16) verjüngen sich von außen her in Richtung der zentralen Mittellinie (9). Ihre Wandstärke verringert sich im Ausführungsbeispiel von z.B. 9 auf 6,2 mm. Die Formsteifigkeit der Biegeplatten (15, 16) nimmt somit in Richtung der Klemmzone (22) nahezu stetig ab. Die Übergänge zwischen den Zonen (13) und (21) sind beispielsweise mit großen Radien ausgerundet. Die Biegezone (21) ist gegenüber der Anbauzone (13) zurückgenommen, um die Verformung der Biegezone (21) nicht in die zwischen dem Grundkörper (1) und der Anbauzone (13) gelegene Einbaufuge einzutragen.

Die Biegeplatten (15, 16) der Biegezone (21) gehen zur jeweiligen Wellenanbindungsbaugruppe (60) hin in die beiden Klemmzonen (22) über, die die umlaufenden Zangenbacken (23, 29) darstellen. Bei der nach den Figuren 2 und 3 rechten Biegeplatte (15) ist der Zangenbacken (29) zugleich ein Teil der Biegeplatte (15). Allerdings ist der Zangenbacken (29) räumlich durch eine z.B. 1,5 mm tiefe und z.B. 2,3 mm breite Axialnut (17) von der Biegezone (21) abgesetzt.

Der Zangenbacken (29) hat innerhalb der Axialnut (17) eine plane Reibfläche (32). Die Reibfläche (32) hat im Ausführungsbeispiel einen mittleren Radius von 142,3 mm. In der Klemmzone (22) beträgt die maximale Breite der Reibfläche (32) z.B. 6 mm.

Die Biegeplatte (16) ist in Radialrichtung z.B. 6,2 mm kürzer als die Biegeplatte (15). Zudem endet sie in Richtung der Welle (5) in einem Innengewinde (18). Nach Figur 3 ist das Innengewinde (18) in Richtung der Anbaufläche (3) durch eine plane Anschlagfläche (19) begrenzt, die gegenüber der Biegeplatte (16) durch eine umlaufende Kerbe separiert ist. Die Anschlagfläche (19) verläuft parallel zur Anbaufläche (3). Sie ist gegenüber der radialen Außenwandung der Biegeplatte (16) so weit zurückgesetzt, dass das Innengewinde (18) eine Länge von 6 mm aufweist.

An der Biegeplatte (16) sitzt als Zangenbacken (23) ein Schraubring. Letzterer ist ein kurzer rohr- oder ringförmiger Körper, der zur Biegeplatte (16) hin ein Außengewinde (24) und einen Anschlagflansch (26) aufweist. Zudem ist am Schraubring (23) ein Kragring (25) angeformt, der im montierten Zustand des Zangenbackens (23) in die Axialnut (17) der Biegeplatte (15) z.B. mit allseitigem Spiel hineinragt. Zumindest ein axiales Spiel von mindestens 0,1 mm ist zwischen dem Grund der Axialnut (17) und dem freien stirnseitigen Ende des Kragringes (25) erforderlich. Werden sehr hohe Öldrücke benutzt, kann es notwendig sein, dass die Bohrungswandung des Kragringes (25) auf der inneren Nutwandung der Axialnut (17) aufliegt. Die innere Nutwandung ist die Nutwandung mit dem kleineren Durchmesser.

Innerhalb des Kragringes (25) bildet die zum Spaltraum (37) hin orientierte Stirnfläche des Zangenbackens (23) eine plane Reibfläche (31). Die Abmessungen der Reibfläche (31) entsprechen denen der Reibfläche (32).

Der Schraubring bzw. Zangenbacken (23) hat ohne den Anschlagflansch (26) eine radiale Ausdehnung von z.B. 6,7 mm bei einer Länge von z.B. 13,8 mm. Der Anschlagflansch (26) steht zur Biegeplatte (16) hin um z.B. 2,2 mm über. Seine Stärke beträgt z.B. 2,2 mm. Der axial überstehende Kragring (25) ragt 5,6 mm über die Reibfläche (31) über. Die Wandstärke des am Zangenbacken (23) angeformten Kragringes (25) beträgt z.B. 2,2 mm. Die radiale Außenwandung des Kragringes (25) ist am freien Ende mit einer 15-Winkelgrad-Fase ausgestattet.

Nach Figur 2 weist der Zangenbacken (23) in seiner linken Stirnseite mehrere Werkzeugausnehmungen (28) in der Form von Bohrungen auf. Über Letztere wird der Zangenbacken (23) - nach der Montage des Dichtringes (50) - mittels eines Zapfen- bzw. Stirnlochschlüssels in das Innengewinde (18) der Biegeplatte (16) geschraubt. Der Einschraubvorgang ist beendet, wenn der Anschlagflansch (26) an der Anschlagfläche (19) der Biegeplatte (16) fest anliegt.

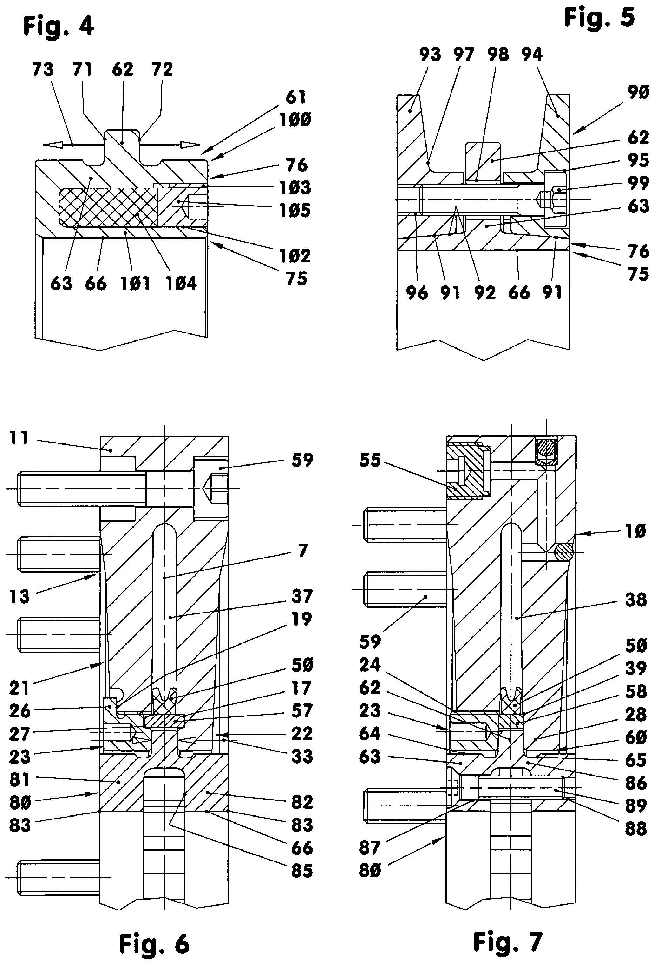

Der Zangenbacken (23) wird an der Biegeplatte (16) des Spaltgehäuses (11) ggf. mittels eines Klebstoffes gesichert. Dazu wird der Klebstoff - vor dem Einschrauben des Zangenbackens (23) in die Biegeplatte (16) - auf das Innengewinde (18) und/oder das Außengewinde (24) aufgetragen. Dieses Klebesicherung lässt sich u.a. auch auf die Zangenbacken (23) der Figuren 6 und 7 anwenden.

Die Reibflächen (31, 32) beider Zangenbacken (23, 29) haben nach innen gerichtete Flächennormalen (33). Letztere zeigen nach Figur 6 in Richtung der Mittenebene (7). Anstelle der planen Reibflächen (31, 32), die zudem parallel zur Montagefuge (16) orientiert sind, können die Reibflächen auch die Gestalt eines Kegelstumpfmantels oder eines Teilbereiches eines Torus haben.

Die Zangenbacken (23, 29) der Betätigungsbaugruppe (10) liegen bei geklemmter Brems- und/oder Klemmvorrichtung an einem Klemmflansch (62) des Kupplungsbereiches (61) einer Wellenanbindungsbaugruppe (60) an, vgl. Figuren 2, 6 und 7.

Radial zur Mittellinie (9) hin wird der Spalt- bzw. Druckraum (37, 38) durch eine Doppellippendichtung (50) abgeschlossen. Die aus z.B. einem Polyurethan mit einer Shore D-Härte von 57 gefertigte Doppellippendichtung (50) hat zwei radial nach außen orientierte Dichtlippen (51), die sich jeweils an den seitlichen Wandungen des Druckraumes (37) aufgrund der eigenen Elastizität und/oder zusätzlich durch den im Druckraum (37) anstehenden Innendruck anlegen. Die Bohrungswandung der Doppellippendichtung (50) liegt auf der glatten radialen Außenwandung des Kragringes (25) auf.

Nach Figur 6 hat der Zangenbacken (23) anstelle eines angeformten Kragringes (25) eine Eindrehung (27). Der Kragring (25), auf dem sich der Dichtring (50) nach Figur 3 radial abstützt, wird durch einen breiten Stützring (57) ersetzt, der nach Figur 6 links von der Eindrehung (27) und dem Innengewinde (18) und rechts von der Axialnut (17) ggf. mit allseitigem Spiel umfasst wird. Nach dem Einbau des Dichtringes (50) wird der Stützring (57) unter den Dichtring (50) geschoben und abschließend der Zangenbacken (23) eingeschraubt.

In Figur 7 wird im Bereich der Zangenbacken (23, 29) auf die Axialnut (17) und die Eindrehung (27) verzichtet. Zudem wird der breite Stützring (57) durch einen schmalen Stützring (58) ersetzt. In diesem Zusammenhang wird der Spaltraum (38) radial außerhalb des schmalen Stützringes (58) schmäler gestaltet, um im Bereich des Sitzes des Stützringes (58) eine beidseitige Spaltraumverbreiterung (39) entstehen zu lassen. Der Boden der Spaltraumverbreiterung (39), ein rechter und linker schmaler Streifen, hat einen Durchmesser, der dem minimalen Durchmesser des Innengewindes (18) entspricht. Der Stützring (58) liegt zumindest bei entlastetem Druckraum (38) mit geringem Spiel am Boden der Spaltraumverbreiterung (39) an.

Die zum Spaltraum (38) hin orientierte Stirnfläche des Zangenbackens (23) ist hier eine Planfläche.

Bei den Lösungsvarianten nach den Figuren 6 und 7 sind die Innendurchmesser der Stützringe (57, 58) und/oder ihre Umfassungen immer so groß gewählt, dass sie bei geöffneter Brems- und/oder Klemmvorrichtung die rotierenden Teile der Welle (5) nicht kontaktieren.

In den Figuren 1 und 3 bis 5 sind vier verschiedene Wellenanbindungsbaugruppen (80, 90, 100, 110) dargestellt. Die Figur 3 zeigt als Wellenanbindungsbaugruppe eine Anbindungsbaugruppe mit Axialmontageflansch (110). Bei dieser Variante besteht der Kupplungsbereich (61) aus einem Flanschkern (63), einem ringförmigen Körper, der radial außen den z.B. zentral angeformten Klemmflansch (62) trägt. Der z.B. 4,4 mm breite Klemmflansch (62) steht als umlaufender Steg vom Flanschkern (63) radial um z.B. 4 mm ab. Seine Stirnflächen bilden z.B. ebene Reibflächen (71, 72). Letztere sind in der Regel, wie auch die Reibflächen (31, 32) der Zangenbacken (23, 29), fein bearbeitet. Die Reibflächen (71, 72) haben nach außen gerichtete Flächennormalen (73).

Alternativ können die Reibflächen (31, 32) oder die Reibflächen (71, 72) eine Oberflächenstruktur aufweisen. Beispielsweise entsteht diese durch Sandstrahlen oder durch eine Diamant- oder Saphirbeschichtung. Derartige Beschichtungen weisen eine Schichtstärke von z.B. 0,038 mm auf. Die durchschnittliche Korngröße des Beschichtungsgrundmaterials liegt bei dieser Schichtstärke bei 30 µm.

Der Klemmflansch (62) geht in den Flanschkern (63) beidseitig über Entlastungskerben (65) über, vgl. Figur 7. Die Entlastungskerben (65) sind 2,8 mm breit, 0,65 mm tief und weisen beidseitig jeweils 1 mm-Radien auf.

Der Flanschkern (63) nach Figur 3 hat zur Ausbildung eines Axialmontageflansches (111) eine zentrale Stufenbohrung (112), die eine radiale Sitzfläche (113) und flanschbundseitig eine plane Bundfläche (114) trägt. Im Bereich des Axialmontageflansches (111) befinden sich mehrere zur Mittellinie (9) parallele Bohrungen (115) mit Zylindersenkungen. In diesen Bohrungen (115) sitzen Schrauben (119), über die die Anbindungsbaugruppe (110) direkt mit der Welle (5) an deren Wellenbund (6) verschraubt ist.

Der Klemmflansch (62) kann ggf. auch Quernuten aufweisen, die bis an den Flanschgrund (64) reichen. Auf diese Weise stehen anstatt eines vollständig umlaufenden Klemmflansches (62) mehrere oder viele Klemmstege vom Flanschkern (63) radial ab, um zwischen die Zangenbacken (23, 29) hineinzuragen. Die Klemmstege können dabei - zur Beeinflussung des Vorrichtungsgeräusches - mit konstanter oder unregelmäßiger Teilung vom Flanschkern (63) abstehen.

Die Figuren 1, 2, 6 und 7 zeigen eine Wellenanbindungsbaugruppe (80) mit einem Doppelradialspannflansch. Hier hat der Flanschkern (63) eine zentrale zylindrische Bohrung (66), in die hier mittig eine Nut (85) eingearbeitet ist, die einen z.B. rechteckigen Querschnitt hat. So entstehen zur Herstellung eines Spannmechanismus (76) im Wellenanbindungsbereich (75) zwei Spannflansche (81, 82). Die Nutbreite beträgt z.B. 7 mm bei einer Nuttiefe von z.B. 7,35 mm. Die Nut (85) hat zwei Ausrundungsradien von 1,5 mm. Zwischen der einzelnen Entlastungskerbe (65) und der nächstgelegenen Nutausrundung liegt ein Materialsteg (86) von 1,5 bis 2 mm. Der Flanschkern (63) ist im Bereich der Spannflansche (81, 82) so durchbohrt, dass sich nach den Figuren 2 und 7 rechts von der Nut (85) paarweise viele Bohrungen (87) mit Kegelsenkung und links von der Nut (85) entsprechend viele Gewindebohrungen (88), z.B. M4, befinden. Im Ausführungsbeispiel sind 48 Schrauben (89) eingeschraubt.

Ggf. ist die Spannfläche (66), deren Innendurchmesser hier z.B. 260 mm beträgt, mit einer Diamant- oder Saphirbeschichtung ausgestattet, vgl. ggf. vorhandene Beschichtung der Reibflächen (31, 32) oder (71, 72). Anstelle der festhaftenden Beschichtung kann auch in die Montagefuge zwischen der Spannfläche (66) und der Wellenoberfläche eine Diamantpaste zum Verbessern der Haftung eingebracht werden. Alternativ kann die Spannfläche (66) und/oder die Wellenoberfläche im Sitzbereich des Flanschkerns (63) über eine Reibstruktur verfügen, die z.B. aufgelasert wird.

Werden nach dem Aufschieben der Vorrichtung auf die Welle (5) an dem vorgesehenen Einbauplatz die Schrauben (89) festgeschraubt, so werden die Spannflansche (81, 82) gegeneinander gezogen. Hierdurch legen sich aufgrund der gelenkartigen Nachgiebigkeit der Materialstege (86) des Flanschkerns (63) die Spannflansche (81, 82) über die Tragkanten (83), vgl. Figur 6, primär unter radialer Verspannung fest an.

Eine alternative Wellenanbindungsbaugruppe (60) ist in Figur 4 dargestellt. Sie zeigt eine Anbindungsbaugruppe (100) mit Verdrängerspannhülse. Hier weist der Flanschkern (63) als Wellenanbindungsbereich (75) eine umlaufende Stirnnut (102) auf, die nach Figur 4 von der rechten Stirnseite aus in den Flanschkern (63) eingearbeitet ist. In die außenliegende Wandung der Stirnnut (102) ist z.B. 7 mm tief ein Feingewinde (103) eingeschnitten. Zur Welle (5) bzw. zur Bohrung (66) hin bleibt eine elastische, z.B. 1,4 mm dicke Klemmhülsenwandung (101) der Verdrängerspannhülse stehen.

In die Stirnnut (102) ist als Verdrängerkörper ein ringförmiger Elastomerkörper (104) eingesetzt. Seine Breite überdeckt 55 bis 70% der Flanschkernbreite. Seine Wandstärke misst z.B. 5 mm. Zur Herstellung eines klemmenden Spannmechanismus (76) wird bei der Montage der Anbindungsbaugruppe (100) auf die Welle (5) in das Innengewinde (103) ein Gewindering (105), z.B. mittels Zapfenschlüssels, eingeschraubt. Der Elastomerkörper (104) wird so verdichtet, dass sich die Klemmhülsenwandung (101) verdrehfest an die Welle (5) anschmiegt.

Der Elastomerkörper (104) ist beispielsweise aus dem Acrylnitril-Butadien-Kautschuk NBR hergestellt. Seine Härte in Shore A liegt zwischen 64 und 68.

Die Figur 5 zeigt einen Teilschnitt einer Wellenanbindungsbaugruppe (90) mit einer Schrumpfscheibenverbindung. Hier ist der Flanschkern (63) ein relativ dünner Ring, der sich beidseitig nach außen im Durchmesser verjüngt. Rechts und links von dem zentralen Klemmflansch (62) weist er als radiale Außenwandung zwei Kegelstumpfmäntel (91) auf. Der zentrale Klemmflansch (62) ragt hier ca. 11,5 mm in Radialrichtung über die Kegelstumpfmäntel (91) über.

Auf diesen Kegelstumpfmänteln (91) sitzen beidseitig die Ringkegelspannelemente (93, 94) auf, um zusammen mit dem Flanschkern (63) eine als Spannmechanismus dienende Schrumpfscheibe zu bilden. Die Ringkegelspannelemente (93, 94) sind Ringe, deren zentrale Ausnehmungen (92) konisch passend zu den Kegelstumpfmänteln (91) gestaltet sind. Der Konuswinkel beträgt z.B. 5 Winkelgrade. Um Platz für die Zangenbacken (23, 29) der Betätigungsbaugruppe (10) zu lassen, sind die Ringkegelspannelemente (93, 94) jeweils an den Stirnseiten, die zum Klemmflansch (62) hin orientiert sind, mit z.B. an der engsten Stelle ca. 4,3 mm breiten und 10 mm tiefen Eindrehungen (97) versehen. Die Breite der Eindrehungen (97) vergrößert sich mit zunehmendem Radius stetig.

Beide Ringkegelspannelemente (93, 94) tragen koaxiale Bohrungen (95, 96) für die Schrauben (99), mit denen die Ringkegelspannelemente (93, 94) unter axialer und radialer Verspannung gegen den dünnwandigen Flanschkern (63) gepresst werden. Das nach Figur 5 linke Ringkegelspannelement (93) weist dazu eine Gewindebohrung (96) auf, während das rechte Ringkegelspannelement (94) mit einer Bohrung (95) mit Zylindersenkung versehen ist. Die Schrumpfscheibe hat z.B. 24 Schrauben (99). Alle Schrauben durchqueren auch den Klemmflansch (62) zwischen den Reibflächen (31, 32) und dem Flanschkern (63), der zu den Bohrungen (95, 96) eine konzentrische Bohrung (98) aufweist.

Ausgeliefert wird diese Brems- und/oder Klemmvorrichtung in Kombination mit der gewählten Wellenanbindungsbaugruppe (80, 90, 100, 110). Dabei sitzt die jeweilige Wellenanbindungsbaugruppe (80, 90, 100, 110) koaxial in der Betätigungsbaugruppe (10). Für die Montage in der die Vorrichtung aufnehmenden Maschine wird die Wellenanbindungsbaugruppe (80, 90, 100) auf die Welle (5) geschoben und dort direkt an der Anbaufläche (3) des Grundkörpers (1) anstehend - in der Regel lösbar - befestigt. Abschließend werden die Befestigungsschrauben (59) in die entsprechenden grundkörperseitigen Bohrungen eingesetzt und dort verschraubt.

Steht im Druckraum (37) kein Hydraulikölbetriebsdruck an, so ist die Welle (5) gegenüber dem Grundkörper (1) festgeklemmt. Der Druckraum (37) weist keinen nennenswerten Öldruck auf, da der Ölzulauf über ein nicht dargestelltes Ventil in den Öltank entlastet ist. Die Biegeplatten (15, 16) liegen vorgespannt über ihre Zangenbacken (23, 29) am Klemmflansch (62) an, vgl. Figur 2. Die Vorspannung ergibt sich aus der Federrate der vorgebeulten Biegeplatten (15, 16). Die Höhe der Federrate ist eine Funktion der ringscheibenseitigen Werkstoffauswahl und der Geometrie der Biegezone (21). Das erzeugte Brems- bzw. Haltemoment liegt bei 3000 ± 200 Nm.

Die Biegeplatten (15, 16) befänden sich nur dann im vollständig entspannten Zustand, wenn kein Klemmflansch (62) zwischen den Zangenbacken (23, 29) läge. Dann wäre im Ausführungsbeispiel der Druckraum (37, 38) ein Spaltraum mit konstanter Spaltbreite.

Um die Brems- und/oder Klemmvorrichtung zu lösen, wird z.B. über den Hydraulikadapter (56), vgl. Figur 3, der Öldruck im Druckraum (37, 38) auf z.B. 100 bis 150 * 10⁵ Pa erhöht. Vom Hydraulikadapter (56) aus pflanzt sich die Druckerhöhung über die Verteilbohrungen (42) und (43) in den Druckraum (37, 38) fort. Die Biegeplatten (15, 16) beulen in den elastischen Biegezonen (21), vgl. Figur 3. Dabei wandert jede Klemmzone (22) gegenüber der ortsfest bleibenden Anbauzone (13) im Wesentlichen in Axialrichtung nach außen. Die Zangenbacken (23, 29) heben in Richtung der Pfeile (47) vom Klemmflansch (62) ab. Die betätigungsbaugruppenseitigen Reibflächen (31, 32) entfernen sich von den wellenanbindungsbaugruppenseitigen Reibflächen (71, 72), so dass zwischen der Welle (5) und dem Grundkörper (1) kein Kontakt mehr besteht. Das Lüftspiel pro Reibflächenpaarung (31) zu (71) und (32) zu (72), also der Abstand zwischen den zuvor sich kontaktierenden Reibflächen, beträgt nun zwischen 0,3 und 0,5 mm. Die Vorrichtung ist auf 5 bis 10 Millionen Öffnungs- bzw. Schließzyklen ausgelegt.

### Bezugszeichenliste:

- 1: Grundkörper
- 2: Zentrierung, Außenzentrierung
- 3: Anbaufläche von (1)
- 4: Bohrung, zentral von (10)
- 5: Welle
- 6: Wellenbund
- 7: Mittenebene
- 8: fiktive Achse, vertikal
- 9: Mittellinie der Vorrichtung, zentral

- 10: Betätigungsbaugruppe
- 11: Spaltgehäuse, bereichsweise beulbar
- 12: Vorderseite
- 13: Anbauzone
- 14: Außenwandung, Stirnwandung
- 15: Biegeplatte, außen, groß
- 16: Biegeplatte, innen, klein
- 17: Axialnut in (15)
- 18: Innengewinde, Feingewinde
- 19: Anschlagfläche, plan

- 21: Biegezone, beulbar, elastisch
- 22: Klemmzonen
- 23: Zangenbacken, angeschraubt, Schraubring
- 24: Außengewinde
- 25: Kragring
- 26: Anschlagflansch
- 27: Eindrehung
- 28: Werkzeugausnehmung
- 29: Zangenbacken, angeformt

- 31, 32: Reibflächen
- 33: Flächennormalen von (31, 32)
- 37: Druckraum; Spaltraum; Nut, breit
- 38: Druckraum; Spaltraum; Nut, schmal
- 39: Spaltraumverbreiterung

- 41: Zulaufgewindebohrungen
- 42: Verteilbohrung, radial
- 43: Verteilbohrung, axial
- 45: Bohrungen mit Senkungen, Durchgangsbohrungen, Befestigungsbohrungen
- 47: Pfeile, Bewegungsrichtung
- 48: Hydraulikölzulauf
- 49: Schneidring

- 50: Doppellippendichtung, Dichtring
- 51: Dichtlippen
- 52: Verschlussstopfengewindebohrung
- 53: Klemmbüchse
- 54: Stauchkugel
- 55: Verschlussstopfen
- 56: Hydraulikadapter
- 57: Stützring breit, für (50)
- 58: Stützring schmal, für (50)
- 59: Befestigungsschrauben

- 60: Wellenanbindungsbaugruppe
- 61: Kupplungsbereich
- 62: Klemmflansch, zentral
- 63: Flanschkern
- 64: Flanschgrund
- 65: Entlastungskerben
- 66: Bohrung, zentral; Spannfläche von (60)

- 71, 72: Reibflächen
- 73: Flächennormalen von (71, 72)
- 75: Wellenanbindungsbereich
- 76: Spannmechanismus

- 80: Wellenanbindungsbaugruppe mit Doppelradialspannflansch
- 81, 82: Spannflansch radial, links, rechts
- 83: Tragkanten
- 85: Nut
- 86: Materialsteg
- 87: Bohrung mit Kegelsenkung
- 88: Gewindebohrung
- 89: Schraube, Zylinderkopfschraube

- 90: Wellenanbindungsbaugruppe mit Schrumpfscheibenverbindung
- 91: Kegelstumpfmäntel, Außenwandungen, radial; Konen
- 92: Ausnehmung, zentral
- 93, 94: Ringkegelspannelemente
- 95: Bohrung mit Senkung
- 96: Gewindebohrung
- 97: Eindrehung
- 98: Bohrung in (62)
- 99: Schrauben

- 100: Wellenanbindungsbaugruppe mit Verdrängerspannhülse
- 101: Klemmhülsenwandung
- 102: Stirnnut, Ausnehmung für (104) und (105)
- 103: Innengewinde, Feingewinde
- 104: Elastomerkörper, Gummikörper, Verdrängerkörper
- 105: Gewindering

- 110: Wellenanbindungsbaugruppe mit Axialmontageflansch
- 111: Axialmontageflansch
- 112: Stufenbohrung
- 113: Sitzfläche, radial
- 114: Bundfläche, plan
- 115: Bohrungen für (119)
- 119: Schrauben

## Patentansprüche

1. Brems- und/oder Klemmvorrichtung für eine gegenüber einem Grundkörper (1) geführte Welle (5) mit einer Betätigungsbaugruppe (10) und mit einer Wellenanbindungsbaugruppe (60),
- wobei die Betätigungsbaugruppe (10) ein Spaltgehäuse (11, 12) aufweist, das eine Anbauzone (13) und eine bereichsweise elastisch beulbare Biegezone (21) mit zwei durch einen Spaltraum (37, 38) getrennten Biegeplatten (15, 16) hat,
- wobei die Biegeplatten (15, 16) in zwei einander gegenüberliegenden Klemmzonen (22) jeweils Zangenbacken (23, 29) mit Reibflächen (31, 32) aufweisen, deren Flächennormalen (33) nach innen gerichtet sind,
- wobei zwischen den Biegeplatten (15, 16) ein abgedichteter Druckraum (37) liegt, der zum elastischen Auseinanderdrücken der Reibflächen (31, 32) mit einem Druckmedium befüllbar ist,
- wobei die Wellenanbindungsbaugruppe (60, 80, 90, 100, 110) einen Kupplungsbereich (61) aufweist, der zwei voneinander beabstandete Reibflächen (71, 72) hat, deren Flächennormalen (73) nach außen weisen,
- wobei die Wellenanbindungsbaugruppe (60) einen Wellenanbindungsbereich (75) aufweist,
- wobei der Wellenanbindungsbereich (75) entweder direkt oder indirekt über einen Spannmechanismus (76) am Kupplungsbereich (61) angeordnet ist und
- wobei bei entlastetem Druckraum (37) die Reibflächen (31, 32) der Betätigungsbaugruppe (10) an den Reibflächen (71, 72) der Wellenanbindungsbaugruppe (60) unter Bereitstellung der Klemm- und/oder Bremskraft angelegt sind.

2. Brems- und oder Klemmvorrichtung gemäß Anspruch 1, **dadurch gekennzeichnet, dass** mindestens eine Zangenbacke (23) ein an der jeweiligen Biegeplatte (16) anschraubbarer Schraubring ist.

3. Brems- und oder Klemmvorrichtung gemäß Anspruch 2, **dadurch gekennzeichnet, dass** mindestens eine Zangenbacke (23) einen axial abstehenden Kragring (25) aufweist.

4. Brems- und oder Klemmvorrichtung gemäß Anspruch 1, **dadurch gekennzeichnet, dass** der Druckraum (37, 38) in Axialrichtung durch die Biegeplatten (15, 16) und in Radialrichtung durch mindestens einen Dichtring (50) begrenzt ist, wobei der Dichtring (50) ein Doppellippendichtring ist, dessen beiden Dichtlippen (51) radial nach außen orientiert sind.

5. Brems- und oder Klemmvorrichtung gemäß Anspruch 1, **dadurch gekennzeichnet, dass** die Wellenanbindungsbaugruppe (80, 90, 100) einen Flanschkern (63) mit einem angeformten oder angebauten Klemmflansch (62) aufweist.

6. Brems- und oder Klemmvorrichtung gemäß Anspruch 1, **dadurch gekennzeichnet, dass** der Wellenanbindungsbereich (75) der Wellenanbindungsbaugruppe (80, 90, 100) radial an der Welle (5) anliegt.

7. Brems- und oder Klemmvorrichtung gemäß Anspruch 1, **dadurch gekennzeichnet, dass** der Wellenanbindungsbereich (75) der Wellenanbindungsbaugruppe (80) zwei gegeneinander verspannbare Spannflansche (81, 82) aufweist.

8. Brems- und oder Klemmvorrichtung gemäß Anspruch 1 oder 5, **dadurch gekennzeichnet, dass** der Wellenanbindungsbereich (75) der Wellenanbindungsbaugruppe (90) zwei Ringkegelspannelemente (93, 94) aufweist, die gegen die einander gegenüberliegenden Konen (91) des Flanschkerns (63) verspannbar sind.

9. Brems- und oder Klemmvorrichtung gemäß Anspruch 1, **dadurch gekennzeichnet, dass** der Wellenanbindungsbereich (75) der Wellenanbindungsbaugruppe (100) eine volumenverringerbare Ausnehmung (102) aufweist, in der ein Elastomerkörper (104) als Verdrängerkörper eingeschlossen angeordnet ist.

10. Brems- und oder Klemmvorrichtung gemäß Anspruch 2, **dadurch gekennzeichnet, dass** in der zwischen der Biegeplatte (16) und dem Zangenbacken (23) gelegenen Montagefuge ein die Biegeplatte (16) und den Zangenbacken (23) stoffschlüssig verbindender Klebstoff angeordnet ist.

## Claims

1. Braking and/or clamping device for a shaft (5) guided in relation to a main body (1), comprising an actuation assembly (10) and comprising a shaft coupling assembly (60),
- wherein the actuation assembly (10) has a split housing (11, 12), which has an attachment zone (13) and a partially elastic, pliable bending zone (21) with two bending plates (15, 16) separated by a gap space (37, 38),
- wherein, in two clamping zones (22) lying opposite one another, the bending plates (15, 16) each have jaws (23, 29) with friction surfaces (31, 32) whose surface normals (33) face inward,
- wherein a sealed pressure chamber (37), which can be filled with a pressure medium for pressing the friction surfaces (31, 32) elastically apart, lies between the bending plates (15, 16),
- wherein the shaft coupling assembly (60, 80, 90, 100, 110) has a coupling region (61), which has two friction surfaces (71, 72) spaced apart from one another and whose surface normals (73) face outward,
- wherein the shaft coupling assembly (60) has a shaft coupling region (75),
- wherein the shaft coupling region (75) is arranged on the coupling region (61) either directly or indirectly via a clamping mechanism (76), and
- wherein, when the pressure chamber (37) is unpressurized, the friction surfaces (31, 32) of the actuation assembly (10) contact the friction surfaces (71, 72) of the shaft coupling assembly (60) while providing the clamping and/or braking force.

2. Braking and/or clamping device according to claim 1, **characterized in that** at least one jaw (23) is a screw ring which can be screwed to the respective bending plate (16).

3. Braking and/or clamping device according to claim 2, **characterized in that** at least one jaw (23) has an axially projecting collar ring (25).

4. Braking and/or clamping device according to claim 1, **characterized in that** the pressure chamber (37, 38) is delimited in the axial direction by the bending plates (15, 16) and in the radial direction by at least one sealing ring (50), wherein the sealing ring (50) is a double-lip sealing ring whose two double lips (51) are oriented radially outward.

5. Braking and/or clamping device according to claim 1, **characterized in that** the shaft coupling assembly (80, 90, 100) has a flange core (63) comprising an integrally molded or attached clamping flange (62).

6. Braking and/or clamping device according to claim 1, **characterized in that** the shaft coupling region (75) of the shaft coupling assembly (80, 90, 100) radially contacts the shaft (5).

7. Braking and/or clamping device according to claim 1, **characterized in that** the shaft coupling region (75) of the shaft coupling assembly (80) has two clamping flanges (81, 82) that can be clamped against each other.

8. Braking and/or clamping device according to claim 1 or 5, **characterized in that** the shaft coupling region (75) of the shaft coupling assembly (90) has two annular tapered clamping elements (93, 94), which can be clamped against the opposite cones (91) of the flange core (63).

9. Braking and/or clamping device according to claim 1, **characterized in that** the shaft coupling region (75) of the shaft coupling assembly (100) has a recess (102), which is reducible in volume and in which an elastomer body (104) is arranged enclosed as a displacement body.

10. Braking and/or clamping device according to claim 2, **characterized in that** an adhesive, which integrally-bonds the bending plate (16) and the jaws (23), is arranged in the mounting joint between the bending plate (16) and the jaws (23).

## Revendications

1. Dispositif de freinage et/ou de blocage, destiné à un arbre (5) guidé en rapport à un corps de base (1), pourvu d'un ensemble d'actionnement (10) et d'un ensemble d'accouplement d'arbre (60),
- l'ensemble d'actionnement (10) comportant un carter fendu (11, 12), qui détient une zone de montage (13) et une zone de flexion (21) susceptible d'être élastiquement bosselée par endroits, pourvue de deux plaques de flexion (15, 16) séparées par un interstice (37, 38),
- les plaques de flexion (15, 16) comportant dans deux zones de blocage (22) placées en vis-à-vis respectivement des mâchoires de pince (23, 29) pourvues de surfaces de friction (31, 32), dont les normales de surface (33) sont dirigées vers l'intérieur,
- entre les plaques de flexion (15, 16) se situant un espace sous pression (37) hermétique, qui pour écarter élastiquement les surfaces de friction (31, 32) est remplissable d'un milieu sous pression,
- l'ensemble d'accouplement d'arbre (60, 80, 90, 100, 110) disposant d'une région de couplage (61), qui dispose de deux surfaces de friction (71, 72) écartées l'une de l'autre, dont les normales de surface (73) sont dirigées vers l'extérieur,
- l'ensemble d'accouplement d'arbre (60) comportant une région d'accouplement d'arbre (75),
- la région d'accouplement d'arbre (75) étant placée soit directement ou indirectement, par l'intermédiaire d'un mécanisme de serrage (76) sur la région de couplage (61) et
- lorsque l'espace sous pression (37) est déchargé, les surfaces de friction (31, 32) de l'ensemble d'actionnement (10) étant adjacentes aux surfaces de friction (71, 72) de l'ensemble d'accouplement d'arbre (60), en mettant à disposition la force de blocage et/ou de freinage.

2. Dispositif de freinage et/ou de blocage selon la revendication 1, **caractérisé en ce qu'**au moins une mâchoire de pince (23) est une bague filetée, susceptible d'être vissée sur la plaque de flexion (16) respective.

3. Dispositif de freinage et/ou de blocage selon la revendication 2, **caractérisé en ce qu'**au moins une mâchoire de pince (23) comporte une bague à collerette (25) débordant en direction axiale.

4. Dispositif de freinage et/ou de blocage selon la revendication 1, **caractérisé en ce que** l'espace sous pression (37, 38) est délimité en direction axiale par les plaques de flexion (15, 16) et en direction radiale par au moins une bague d'étanchéité (50), la bague d'étanchéité (50) étant une bague d'étanchéité à double lèvre, dont les deux lèvres d'étanchéité (51) sont orientées vers l'extérieur en direction radiale.

5. Dispositif de freinage et/ou de blocage selon la revendication 1, **caractérisé en ce que** l'ensemble d'accouplement d'arbre (80, 90, 100) comporte un noyau de bride (63), pourvu d'une bride de blocage (62) surmoulée ou rapportée.

6. Dispositif de freinage et/ou de blocage selon la revendication 1, **caractérisé en ce que** la région d'accouplement d'arbre (75) de l'ensemble d'accouplement d'arbre (80, 90, 100) est adjacent en direction radiale à l'arbre (5) t.

7. Dispositif de freinage et/ou de blocage selon la revendication 1, **caractérisé en ce que** la région d'accouplement d'arbre (75) de l'ensemble d'accouplement d'arbre (80) comporte deux brides de serrage (81, 82) susceptibles d'être contraintes l'une contre l'autre.

8. Dispositif de freinage et/ou de blocage selon la revendication 1 ou 5, **caractérisé en ce que** la région d'accouplement d'arbre (75) de l'ensemble d'accouplement d'arbre (90) comporte deux éléments de serrage en cône annulaire (93, 94), qui sont susceptibles d'être contraints contre les cônes (91) placés en vis-à-vis du noyau de bride (63).

9. Dispositif de freinage et/ou de blocage selon la revendication 1, **caractérisé en ce que** la région d'accouplement d'arbre (75) de l'ensemble d'accouplement d'arbre (100) comporte un évidement (102) à volume réductible, dans lequel est placé en étant enfermé un corps en élastomère (104), faisant office de corps de refoulement.

10. Dispositif de freinage et/ou de blocage selon la revendication 2, **caractérisé en ce que** dans la jointure de montage située entre la plaque de flexion (16) et les mâchoires de pince (23) est placé un agent adhésif reliant par matière la plaque de flexion (16) et les mâchoires de pince (23).
